# EUROPÄISCHE PATENTSCHRIFT

(11) **EP 1 270 583 B1**
(45) Veröffentlichungstag und Bekanntmachung des Hinweises auf die Patenterteilung: **31.10.2007**
(21) Anmeldenummer: 02013630.5
(22) Anmeldetag: 19.06.2002
(51) Int. Cl.: C07F 9/54

(54) **Verfahren zur Reinigung von Phosphoniumsalzen**
Process for the purification of phosphonium salts
Procédé pour la purification de sels de phosphonium

(30) Priorität: 19.06.2001 DE 10129403
(43) Veröffentlichungstag der Anmeldung: 02.01.2003
(73) Patentinhaber: BASF Aktiengesellschaft, 67056 Ludwigshafen (DE)
(72) Erfinder: Klein, Daniela, 68161 Mannheim (DE); Wegner, Christoph, 67281 Kirchheim (DE)
(74) Vertreter: Thalhammer, Wolfgang

(56) Entgegenhaltungen:
- EP-A- 0 382 067
- DE-A- 3 708 041
- PATENT ABSTRACTS OF JAPAN vol. 012, no. 472 (C-551), 9. Dezember 1988 (1988-12-09) & JP 63 190893 A (DAICEL CHEM IND LTD), 8. August 1988 (1988-08-08)

## Beschreibung

Die vorliegende Erfindung betrifft ein Verfahren zur Reinigung von Phosphoniumsalzen, die einen Kohlenwasserstoffrest mit 5 bis 40 Kohlenstoffatomen aufweisen, insbesondere Jonylidenethylphosphoniumsalzen, wie 3,7,11-Trinaethyldodeca-2,4,6,10-tetraen-1-yl-phosphoniumsalzen.

Zur Herstellung von Carotinoiden werden vielfach Phosphoniumsalze und Aldehyde in einer Wittig-Reaktion umgesetzt. So werden zur Synthese von Lycopin, einem roten Farbstoff, der als natürliches Carotinoid in Tomaten vorkommt, 3,7,11-Trimethyldodeca-2,4,6,10-tetraen-1-yl-phosphoniumsalze beispielsweise mit 2,7-Dimethyl-2,4,6-octatriendial umgesetzt. β-Jonylidenethyl-phosphoniumsalze können entsprechend1 zu β-Carotin, 2-Hydroxy-β-jonylidenethylphosphoniumsalze entsprechend zu Zeaxanthin etc. umgesetzt werden.

Die EP 0 382 067 beschreibt die Herstellung von 3,7,11-Trimethyldodeca-2,4,6,10-tetraen-1-yl-phosphoniumsalzen durch Umsetzung von 3,7,11-Trimethyldodeca-1,4,6,10-tetraen-3-ol mit mindestens einem Äquivalent Triarylphosphin in einem inerten Lösungsmittel in Gegenwart einer C₁-C₆-Alkansäure oder Bortrifluorid-Etherat. Das primär erhaltene Phosphoniumsalz kann in das Chlorid, Bromid, Sulfat, Hydrogensulfat, Phosphat oder ein Sulfonat überführt werden.

Die DE 3 708 041 beschreibt ein Verfahren zum Herstellen von quaternärem Phosphoniumhydroxid. Ein quaternäres Phosphoniumhalogenid wird gelöst und mit einem stark basischen Anionen-Austauscherharz (OH-Typ) in Kontakt gebracht. gemäß der JP 63 190893 wird ein Phosphoniumsalz einem Anionentausch zum Phosphoniumhydroxid unterzogen und dieses mit einer Carbonsäure neutralisiert.

Es ist kein einfaches Verfahren zur Reinigung der Phosphoniumsalze, insbesondere zur Entfernung des im Überschuss eingesetzten Phosphins bzw. der Säure bekannt.

Aufgabe der Erfindung daher ist die Bereitstellung eines Verfahren, das eine einfache und wirksame Reinigung der rohen Phosphoniumsalze ermöglicht.

Es wurde gefunden, dass diese Aufgabe unter Einsatz einer festen Phase gelöst wird. Der Einsatz einer festen Phase bietet gegenüber Reinigungsverfahren durch Extraktion aus einer flüssigen Phase in eine andere flüssige Phase den Vorteil, dass beliebige Lösungsmittel verwendet werden können, ohne dass Zweiphasigkeit gewährleistet sein muss.

In einem ersten Aspekt betrifft die Erfindung ein Verfahren zur Reinigung von Phosphoniumsalzen der Formel

R-P^{⊕}R'₃ X^{⊖}

worin R für einen Kohlenwasserstoffrest mit 5 bis 40 Kohlenstoffatomen, R' für C₁-C₄-Alkyl oder C₆-C₁₀-Aryl und X für ein Äquivalent eines Anions steht, bei dem man
a) eine mit einem Kationenaustauscherharz in Salzform gepackte Chromatografiesäule mit einer Lösung des rohen Phosphoniumsalzes belädt, indem man die Lösung des rohen Phosphoniumsalzes über das Bett des Kationenaustauscherharzes in Salzform leitet,
b) das Kationenaustauscherharz mit wenigstens einem polaren protischen oder nicht-protischen und/oder wenigstens einem unpolaren Lösungsmittel wäscht, um unerwünschte Bestandteile zu entfernen, und
c) das Phosphoniumsalz mit einer Elektrolytlösung, gegebenenfalls in Kombination mit einem polaren nicht-protischen Lösungsmittel, vom Kationenaustauscherharz eluiert.

In einem zweiten Aspekt betrifft die Erfindung ein Verfahren zur Reinigung von Phosphoniumsalzen der Formel

R-P^{⊕}R'₃ X^{⊖}

worin R, R' und X die vorstehend angegebene Bedeutung haben, bei dem man
a) eine mit einem Adsorberharz gepackte Chromatografiesäule mit einer Lösung des rohen Phosphoniumsalzes belädt, indem man die Lösung des rohen Phosphoniumsalzes über das Bett des Adsorberharzes leitet,
b) das Adsorberharz mit wenigstens einem unpolaren Lösungsmittel und/oder wenigstens einer Elektrolytlösung wäscht, um umerwünschte Bestandteile zu entfernen, und
c) das Phosphoniumsalz mit einem polaren Lösungsmittel von dem Adsorberharz eluiert.

X steht für ein Äquivalent eines Anions, wie Halogenid, z. B. Chlorid oder Bromid, Sulfat, Phosphat, ein Sulfonat, wie Benzolsulfonat oder Toluolsulfonat, C₁-C₆-Alkanoat, insbesondere Acetat, oder Hydroxytrifluorborat.

"C₆-C₁₀-Aryl" steht vorzugsweise für Phenyl oder Toluyl, insbesondere Phenyl.

Der Rest R steht für einen linearen, verzweigten und/oder cyclischen Kohlenwasserstoffrest mit 5 bis 40 Kohlenstoffatomen, vorzugsweise 10 bis 20 Kohlenstoffatomen, insbesondere 15 Kohlenstoffatomen. Er kann ein oder zwei Heteroatome, insbesondere Sauerstoffatome, umfassen. Soweit der Rest R eine Hydroxygruppe umfasst, kann diese geschützt durch übliche Hydroxyschutzgruppen vorliegen, wie den nachstehend als R" genannten. Das erfindungsgemäße Verfahren ist besonders geeignet zur Reinigung von Phosphoniumsalzen, die zur Synthese von Carotinoiden gemäß der Wittig-Reaktion eingesetzt werden, d. h. solchen Phosphoniumsalzen, worin R eine bis 8 Isopreneinheiten, vorzugsweise 2 bis 4 Isopreneinheiten, insbesondere 3 Isopreneinheiten, umfasst.

Typische Beispiele für R sind die folgenden Reste der Formeln Ia-Ik (worin R" für Wasserstoff oder eine Hydroxyschutzgruppe steht, wie Acyl, z. B. Acetyl, Propionyl oder Benzoyl; Alkyl, z. B. Methyl, Ethyl oder t-Butyl; Silyl, z. B. t-Butyldimethylsilyl; oder Alkoxyalkyl, z. B. 2-Methoxy-2-propyl oder Tetrahydropyranyl):

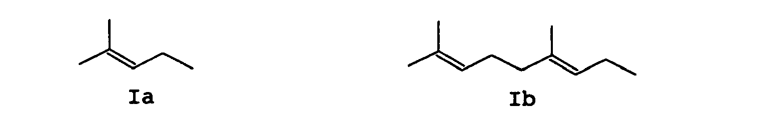

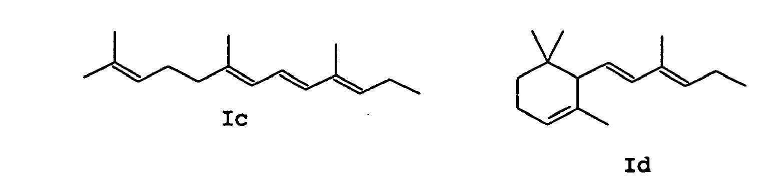

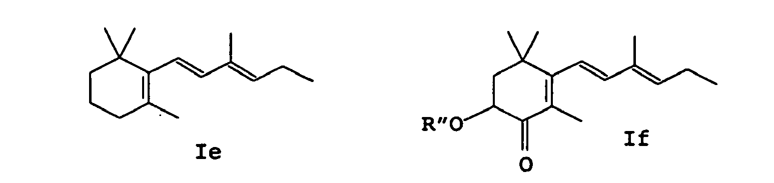

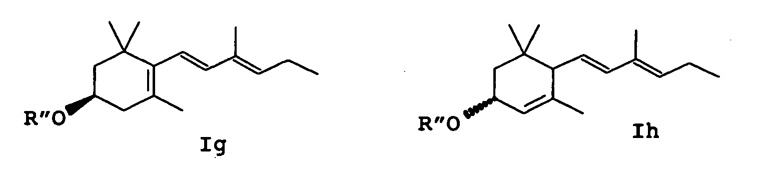

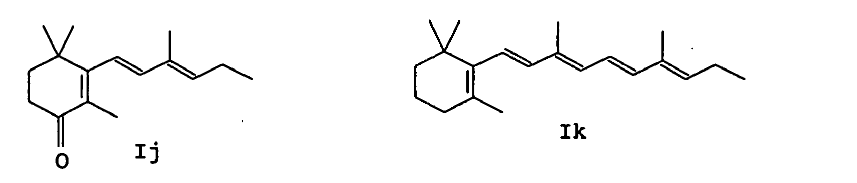

Bevorzugt steht R für einen Jonylidenethylrest. Der Begriff "Jonylidenethyl" soll umfassend verstanden werden und alle C₁₅-Reste umfassen, die sich durch Mehrbesitz von zwei Kohlenstoffatomen von natürlich vorkommenden Jononen ableiten und/oder als Abbauprodukte natürlich vorkommender Carotinoide aufgefasst werden können. Hierzu zählen insbesondere ψ-Jonylidenethyl- oder Pseudojonylidenethyl (3,7,11-Trimethyldodeca-2,4,6,10-tetraen-1-yl; Ic), α-Jonylidenethyl (Id), β-Jonylidenethyl (Ie), 3-Hydroxy-4-keto-β-jonylidenethyl (If, R"=H), 3-Hydroxy-β-jonylidenethyl (Ig, R"=H), 3-Hydroxy-α-jonylidenethyl (Ih, R"=H), 4-Keto-β-jonylidenethyl (Ij).

Die Phosphoniumsalze können auf verschiedene Art und Weise hergestellt werden. Wenn R für einen Jonylidenethylrest steht, werden sie zweckmäßigerweise durch Umsetzung des entsprechenden Vinyljonols mit mindestens einem Moläquivalent Phosphin der Formel PR'₃ in einem Lösungsmittel in Gegenwart einer Säure erhalten. Die Vinylionole können ihrerseits z. B. aus Jononen durch Umsetzung mit Vinyl-Grignard erhalten werden.

So wird ein Phosphoniumsalz, in dem R für einen Rest der Formel Ic steht, zweckmäßigerweise durch Umsetzung von 3,7,11-Trimethyldodeca-1,4,6,10-tetraen-2-ol mit dem Phosphin und der Säure, erhalten.

Das Phosphin wird vorzugsweise im Überschuss verwendet, z. B. 1,1 bis 3 Äquivalente. Bevorzugt sind Triarylphosphine, am meisten bevorzugt ist Triphenylphosphin. Die Säure wird vorzugsweise in einem Überschuss von wenigstens 3, insbesondere wenigstens 8 Äquivalenten eingesetzt. Als Säuren sind C₁-C₆-Alkansäuren, Bortrifluorid-Etherat, Chlorwasserstoffsäure, Bromwasserstoffsäure, Phosphorsäure oder eine Sulfonsäure, wie Benzolsufonsäure oder Toluolsulfonsäure, geeignet. Wird als Säure eine Alkansäure, wie Essigsäure, verwendet, wird diese zweckmäßigerweise zugleich als Lösungsmittel eingesetzt.

Im erfindungsgemäßen Verfahren geht man von einer Lösung des rohen Phosphoniumsalzes in einem Lösungsmittel, wie gegebenenfalls chlorierten oder aromatischen Kohlenwasserstoffen, Ethern, Alkoholen oder Estern, wie Hexan, Dichlormethan, Trichlormethan, Benzol, Toluol, Xylol, Diisopropylether, Tetrahydrofuran, Methanol, Ethanol und dergleichen, aus. Besonders bevorzugt liegt das rohe Phosphoniumsalz in Lösung in einer C₁-C₆-Alkansäure, insbesondere Essigsäure, oder ein Gemisch davon mit Wasser, vor.

Bei dem Kationenaustauscher gemäß dem ersten Aspekt der Erfindung handelt es sich vorzugsweise um einen stark sauren Kationenaustauscher, der makroporös oder gelförmig, niedrig- oder hochvernetzt sein kann. Ionenaustauscher auf Polystyrolbasis mit Sulfonsäurengruppen haben sich besonders bewährt. Derartige Ionenaustauscher sind z. B. unter der Bezeichnung S1468, S100 von der Fa. Bayer oder der Bezeichnung Amberlite IR-120, Amberlite 200 von der Fa. Rohm und Haas im Handel erhältlich. Vor dem Aufbringen des zu reinigenden Phosphoniumsalzes wird der Kationenaustauscher in die Salzform, d. h. eine Form gebracht, in der die kovalent an das Harz gebundenen anionischen Gruppen mit Metallkationen, vorzugsweise Alkalimetallkationen, insbesondere Natriumionen, assoziiert sind. Sofern der Kationenaustauscher nicht bereits in Salzform vorliegt, kann dies in einfacher Weise dadurch erfolgen, dass man eine wässrige Lösung eines Metallhydroxids über das Bett des Kationenaustauschers leitet.

Das Adsorberharz gemäß dem zweiten Aspekt der Erfindung weist vorzugsweise eine durchschnittliche Porengröße von 50 bis 100 Å, insbesondere 60 bis 100 Å, auf. Geeignete Adsorberharze sind unter anderem solche auf Polystyrol- oder Polyacrylatbasis. Polyacrylatadsorberharze sind bevorzugt. Geeignete Harze sind unter der Bezeichnung XAD2,XAD4, XAD7, XAD16 von Rohm und Haas im Handel erhältlich.

Zur Durchführung des erfindungsgemäßen Verfahrens wird eine handelsübliche Chromatografiesäule in herkömmlicher Weise mit einem erfindungsgemäß geeigneten Ionenaustauscher- oder Adsorberharz gepackt. Das Harzmaterial kann beispielsweise in Wasser aufgeschlämmt und dann in die Säule eingefüllt werden. Das Material wird dann in geeigneter Weise verdichtet und mit Hilfe eines Halteorgans fixiert. Anschließend wird die Säule in üblicher Weise durch Spülen und Äquilibrieren des Harzes vorbehandelt.

Die rohe Phosphoniumsalzlösung bzw. die Lösungs- und Elutionsmittel können in Richtung der Schwerkraft oder entgegen der Richtung der Schwerkraft über das Bett des Kationenaustauschers bzw. des Adsorberharzes geleitet werden. Vorzugsweise leitet man die Flüssigkeiten entgegen der Richtung der Schwerkraft durch das Bett, um ein Verdichten des Betts und einen damit verbundenen Druckanstieg zu verhindern. Mit Vorteil benutzt man hierzu eine Membranpumpe, deren Druckseite mit dem unteren Ende der Chromatografiesäule verbunden ist.

Die vorbereitete Chromatografiesäule wird als nächstes mit geringer Pumpgeschwindigkeit mit einer Lösung des zu reinigenden Phosphoniumsalzes beladen. Die vorübergehende Bindung an das Harzmaterial beruht bei einem Kationenaustauscher auf einer ionischen Bindung der Phosphoniumkationen an die anionischen Ankergruppen des Ionenaustauschers, bei einem Polymerharz auf einer reversiblen Adsorptionswirkung.

Nach dem Beladen der Säule werden die unerwünschten Bestandteile durch Spülen mit geeigneten Waschflüssigkeiten entfernt. Beim Verfahren nach dem ersten Aspekt der Erfindung dient das Waschen mit dem polaren protischen Lösungsmittel zur Entfernung polarer Verunreinigungen, wie z. B. überschüssiger Alkansäure, und das Waschen mit dem unpolaren Lösungsmittel zur Entfernung unpolarer Verunreinigungen, wie z. B. überschüssigen Phosphins. Beim Verfahren nach dem zweiten Aspekt der Erfindung erfolgt die Entfernung polarer Verunreinigungen durch Spülen mit einer Elektrolytlösung. Die Anwesenheit des Elektrolyten ist erforderlich, um die Löslichkeit des Phosphoniumsalzes zu verringern, da dieses sonst vorzeitig eluiert werden würde.

Geeignete polare protische Lösungsmittel sind solche mit einer Dielektrizitätskonstanten DK von 40 bis 110 (bezüglich der Bestimmung der Dielektrizitätskonstanten wird auf CRC Handbook of Chemistry and Physics, CRC Press, 76. Aufl, S. 6-159 bis 6-192 verwiesen), die über wenigstens ein an ein Sauerstoff- oder Stickstoffatom gebundenes Wasserstoffatom verfügen. Hierzu zählen insbesondere Wasser und C₁-C₄-Alkanole, wie Methanol oder Ethanol.

Geeignete unpolare Lösungsmittel sind solche einer DK von 1 bis 7. Hierzu zählen insbesondere aliphatische Kohlenwasserstoffe, wie Hexan, Heptan, Petrolether, oder Diethylether.

Geeignete polare nicht-protische Lösungsmittel sind solche mit einer Dielektrizitätskonstanten DK von 7 bis 70. Hierzu zählen insbesondere halogenierte Kohlenwasserstoffe, wie Dichlormethan, Trichlormethan, Tetrachlormethan, Dichlorethylen, Trichlorethylen, Dichlorethan, Trichlorethan, Tetrahydrofuran, Dioxan oder Dimethylsulfoxid. Davon ist Dichlormethan bevorzugt.

Geeignete Elektrolytlösungen sind Lösungen von Salzen in Wasser, C₁-C₄-Alkanolen oder Gemischen davon. Als Salze kommen insbesondere Erdalkali- oder Alkalimetallhalogenide, z. B. -chloride, -sulfate oder -C₁-C₆-alkanoate in Betracht. Die Natrium- und Kaliumsalze sind im Allgemeinen bevorzugt. Natriumchlorid ist am meisten bevorzugt. Die Salzkonzentration beträgt vorzugsweise wenigstens 2 Gew.-% bis zur Sättigungsgrenze, meist 5 bis 25 Gew.-%.

Zur Rückgewinnung des gereinigten Phosphoniumsalzes wird die Säule mit einem geeigneten Elutionsmittel gespült. Bei dem Verfahren gemäß dem ersten Aspekt der Erfindung wird das Produkt mittels einer Elektrolytlösung eluiert. Die Elektrolytlösung kann gegebenenfalls in Kombination mit einem polaren nicht-protischen Lösungsmittel verwendet werden. Die Elektrolytlösung und das polare nicht-protische Lösungsmittel können als Gemisch oder abwechselnd nacheinander in beliebiger Reihenfolge, wahlweise in mehreren Portionen, aufgebracht werden. Wenn das Lösungsmittel mit der Elektrolytlösung nicht mischbar ist, wird die organische Phase des Eluats zweckmäßigerweise abgetrennt und auf die gewünschte Konzentration eingedampft. Beim zweiten Aspekt der Erfindung wird zur Elution ein polares Lösungsmittel, vorzugsweise ein nicht-protisches polares Lösungsmittel, verwendet. Das Eluat kann dann auf die gewünschte Konzentration eingedampft werden. Das Verfahren liefert im Allgemeinen Ausbeuten von mehr als 70 %.

Die vorliegende Erfindung wird nun durch nachstehende Beispiele weiter veranschaulicht. Die Ausbeute der gereinigten Phosphoniumsalze und die Verhältnisse von E- zu Z-Isomeren wurden durch Hochdruck-Flüssigchromatografie (HPLC) mit Hilfe interner Standards ermittelt. In den Beispielen wurden die Phosphoniumsalzlösung und die Lösungsmittel zum Spülen bzw. Eluieren mittels einer Membrandosierpumpe von unten nach oben durch die Chromatografiesäule geleitet.

### Beispiel 1

Eine Chromatografiesäule wurde mit 320 ml mit Wasser angefeuchtetem Kationenaustauschermaterial (Bayer Lewatit K2641) gefüllt. Das Material wurde gut verdichtet und mit Hilfe eines variablen Endstücks fixiert. Dann wurden 150 g rohes Triphenyl-(3,7,11-trimethyldodeca-2,4,6,10-tetraen-1-yl)-phosphoniumsalz (etwa 26%ig; gelöst in 70 gew.-%iger wässriger Essigsäure) mit einem Verhältnis von E- zu Z-Isomeren von 4,17 mit einer Pumpgeschwindigkeit von 150 ml/h von unten auf die Säule aufgetragen. Danach wurde die Säule zum Entfernen der Essigsäure mit 1,35 l entsalztem Wasser gespült. Die Pumpgeschwindigkeit betrug beim Spülvorgang 1500 ml/h. Zur Entfernung von nicht umgesetztem Triphenylphosphin wurde anschließend mit 1,0 l n-Heptan gespült. Die Pumpgeschwindigkeit betrug 1500 ml/h.

Das gereinigte Produkt wurde viermal abwechselnd mit je 250 ml NaCl-Lösung (10%ig) und 250 ml Dichlormethan von dem Ionenaustauschermaterial eluiert und die Phasen getrennt. Die organische Phase wurde auf eine etwa 25%ige Lösung aufkonzentriert.

Das Produkt wurde mittels HPLC-Analyse bestimmt. Es wurden demnach 27,6 g gereinigtes C₁₅-Phosphoniumsalz mit einem E/Z-Verhältnis von 4,24 gewonnen. Die Ausbeute betrug 71 % d. Th.

### Beispiel 2

Eine Chromatografiesäule wurde mit 320 ml mit Wasser angefeuchtetem Adsorbermaterial auf Polyacrylatbasis (Rohm und Haas Amberlite XAD7) gefüllt. Das Material wurde gut verdichtet und mit Hilfe eines variablen Endstücks fixiert. Dann wurden 150 g rohes Triphenyl-(3,7,11-trimethyldodeca-2,4,6,10-tetraen-1-yl)-phosphoniumsalz (etwa 26%ig; gelöst in 70 gew.-%iger wässriger Essigsäure) mit einem Verhältnis von E- zu Z-Isomeren von 4,22 mit einer Pumpgeschwindigkeit von 150 ml/h auf die Säule aufgetragen. Danach wurde die Säule zum Entfernen der Essigsäure mit 1,35 l 10%iger NaCl-Lösung gespült, wobei die Pumpgeschwindigkeit 1500 ml/h betrug. Zur Entfernung von nicht umgesetztem Triphenylphoshin wurde anschließend mit 1,5 l n-Heptan gespült. Die Pumpgeschwindigkeit betrug 1500 ml/h.

Das gereinigte Produkt wurde mit 1,5 l Dichlormethan von dem Adsorbermaterial eluiert und das Eluat auf eine etwa 25%ige Lösung eingeengt.

Das Produkt wurde mittels HPLC-Analyse bestimmt. Es wurden demnach 29,4 g gereinigtes C₁₅-Phosphoniumsalz mit einem E/Z-Verhältnis von 4,22 gewonnen. Die Ausbeute betrug 75 % d. Th.

### Beispiel 3

Eine Chromatografiesäule wurde mit 350 ml wasserfeuchtem Kationentauscher (Dowex 50 WX 2) gefüllt, das Material gut verdichtet und mittels eines variablen Endstückes fixiert. 100 g rohes Triphenyl-(3,7,11-trimethyldodeca-2,4,6,10-tetraen-1-yl)-phosphoniumsalz (etwa 23%ig; gelöst in 70 gew.-%iger wässriger Essigsäure) mit einem E/Z-Verhältnis von 4,17 wurden mit einer Pumprate von 150 ml/h auf die Säule gepumpt. Danach wurde zum Entfernen der Essigsäure mit 0,9 l entsalztem Wasser (Pumprate 1500 ml/h) und zum Entfernen des Triphenylphosphins mit 1,0 l n-Heptan (Pumprate 1500 ml/h) gespült. Das gereinigte Produkt wurde viermal abwechselnd mit je 250 ml NaCl-Lösung (10%ig) und 250 ml Dichlormethan von dem Ionentauschermaterial eluiert, die Phasen wurden getrennt und die organische Phase auf eine etwa 25%ige Lösung aufkonzentriert. Es wurden 15,9 g gereinigtes C₁₅-Phosphoniumsalz mit einem E/Z-Verhältnis von 4,18 nach HPLC-Analytik isoliert (69 % d. Th.).

### Beispiel 4

Eine Chromatografiesäule wurde mit 350 ml wasserfeuchtem Adsorberharz auf Polystyrolbasis (Rohm und Haas Amberlite XAD 16) gefüllt, das Material gut verdichtet und mittels eines variablen Endstückes fixiert. 100 g rohes Triphenyl-(3,7,11-trimethyldodeca-2,4,6,10-tetraen-1-yl)-phosphoniumsalz (etwa 23%ig; in 70 gew.-%iger wässriger Essigsäure) mit einem E/Z-Verhältnis von 4,22 wurden mit einer Pumprate von 150 ml/h auf die Säule gepumpt. Zum Entfernen der Essigsäure wurde mit 900 ml NaCl-Lösung (10%ig) (Pumprate 1500 ml/h) und zum Entfernen des Triphenylphosphins mit 1,0 1 Heptan (Pumprate 1500 ml/h) gespült. Das gereinigte Produkt wurde mit 1,5 l Dichlormethan von dem Adsorbermaterial eluiert und auf eine etwa 25%ige Lösung aufkonzentriert. Es werden 16,8 g gereinigtes C₁₅-Phosphoniumsalz mit einem E/Z-Verhältnis von 4,19 nach HPLC-Analytik isoliert (73 % d. Th.).

## Patentansprüche

1. Verfahren zur Reinigung von Phosphoniumsalzen der Formel
R-P^{⊕}R'₃ X^{⊖}
worin R für einen Kohlenwasserstoffrest mit 5 bis 40 Kohlenstoffatomen, R' für C₁-C₄-Alkyl oder C₆-C₁₀-Aryl und X für ein Äquivalent eines Anions steht, bei dem man
a) eine mit einem Kationenaustauscherharz in Salzform gepackte Chromatografiesäule mit einer Lösung des rohen Phosphoniumsalzes belädt, indem man die Lösung des rohen Phosphoniumsalzes über das Bett des Kationenaustauscherharzes in Salzform leitet,
b) das Kationenaustauscherharz mit wenigstens einem polaren protischen oder nicht-protischen und/oder wenigstens einem unpolaren Lösungsmittel wäscht, um unerwünschte Bestandteile zu entfernen, und
c) das Phosphoniumsalz mit einer Elektrolytlösung, gegebenenfalls in Kombination mit einem polaren nicht-protischen Lösungsmittel, vom Kationenaustauscherharz eluiert.

2. Verfahren nach Anspruch 1, wobei R eine bis 8 Isopreneinheiten umfasst.

3. Verfahren nach Anspruch 2, wobei R für einen Jonylidenethylrest steht.

4. Verfahren nach Anspruch 3, wobei R für 3,7,11-Trimethyldodeca-2,4,6,10-tetraen-1-yl steht.

5. Verfahren nach einem der vorhergehenden Ansprüche, wobei das polare protische Lösungsmittel unter Wasser und C₁-C₄-Alkanolen und das unpolare Lösungsmittel unter aliphatischen Kohlenwasserstoffen und Diethylether ausgewählt ist.

6. Verfahren nach einem der vorhergehenden Ansprüche, wobei man das polare nicht-protische Lösungsmittel unter halogenierten Kohlenwasserstoffen, Tetrahydrofuran, Dioxan und Dimethylsulfoxid ausgewählt ist.

7. Verfahren nach einem der vorhergehenden Ansprüche, wobei es sich bei der Elektrolytlösung um eine wässrige Natriumchloridlösung handelt.

8. Verfahren zur Reinigung von Phosphoniumsalzen der Formel
R-P^{⊕}R'₃ X^{⊖}
worin R, R' und X die in Anspruch 1 angegebene Bedeutung haben, bei dem man
a) eine mit einem Adsorberharz gepackte Chromatografiesäule mit einer Lösung des rohen Phosphoniumsalzes belädt, indem man die Lösung des rohen Phosphoniumsalzes über das Bett des Adsorberharzes leitet,
b) das Adsorberharz mit wenigstens einem unpolaren Lösungsmittel und/oder wenigstens einer Elektrolytlösung wäscht, um umerwünschte Bestandteile zu entfernen, und
c) das Phosphoniumsalz mit einem polaren Lösungsmittel von dem Adsorberharz eluiert.

9. Verfahren nach Anspruch 8, wobei man als Adsorberharz ein Po-lyacrylat- oder Polystyrol-Adsoberharz verwendet.

10. Verfahren nach Anspruch 8 oder 9, wobei R eine bis 8 Isopreneinheiten umfasst.

11. Verfahren nach Anspruch 10, wobei R für einen Jonylidenethylrest steht.

12. Verfahren nach Anspruch 11, wobei R für 3,7,11-Trimethyldodeca-2,4,6,10-tetraen-1-yl steht.

13. Verfahren nach einem der Ansprüche 8 bis 12, wobei das unpolare Lösungsmittel unter aliphatischen Kohlenwasserstoffen und Diethylether ausgewählt ist und es sich bei der Elektrolytlösung um eine wenigstens 2 gew.-%ige wässrige Natriumchloridlösung handelt.

14. Verfahren nach einem der Ansprüche 8 bis 13, wobei das polare Lösungsmittel unter halogenierten Kohlenwasserstoffen, Tetrahydrofuran, Dioxan und Dimethylsulfoxid ausgewählt ist.

## Claims

1. A process for the purification of phosphonium salts of the formula
R-P^{⊕}R'₃ X^{⊖}
in which R is a hydrocarbon radical with 5 to 40 carbon atoms, R' is C₁-C₄-alkyl or C₆-C₁₀-aryl and X is an equivalent of an anion, in which
a) a chromatography column packed with a cation exchange resin in salt form is loaded with a solution of the crude phosphonium salt by passing the solution of the crude phosphonium salt over the bed of the cation exchange resin in salt form,
b) the cation exchange resin is washed with at least one polar protic or aprotic and/or at least one nonpolar solvent to remove unwanted constituents, and
c) the phosphonium salt is eluted from the cation exchange resin with an electrolyte solution, if appropriate in combination with a polar aprotic solvent.

2. The process according to claim 1, where R comprises one to 8 isoprene units.

3. The process according to claim 2, where R is an ionylideneethyl radical.

4. The process according to claim 3, where R is 3,7,11-trimethyldodeca-2,4,6,10-tetraen-1-yl.

5. The process according to any of the preceding claims, where the polar protic solvent is selected from water and C₁-C₄-alkanols and the nonpolar solvent is selected from aliphatic hydrocarbons and diethyl ether.

6. The process according to any of the preceding claims, where the polar aprotic solvent is selected from halogenated hydrocarbons, tetrahydrofuran, dioxane and dimethyl sulfoxide.

7. The process according to any of the preceding claims, where the electrolyte solution is an aqueous sodium chloride solution.

8. The process for the purification of phosphonium salts of the formula
R-P^{⊕}R'₃ X^{⊖}
in which R, R' and X have the meanings indicated in claim 1, in which
a) a chromotography column packed with an adsorber resin is loaded with a solution of the crude phosphonium salt by passing the solution of the crude phosphonium salt over the bed of the adsorber resin,
b) the adsorber resin is washed with at least one nonpolar solvent and/or at least one electrolyte solution to remove unwanted constituents, and
c) the phosphonium salt is eluted from the adsorber resin with a polar solvent.

9. The process according to claim 8, where a polyacrylate or polystyrene adsorber resin is used as adsorber resin.

10. The process according to claim 8 or 9, where R comprises one to 8 isoprene units.

11. The process according to claim 10, where R is an ionylideneethyl radical.

12. The process according to claim 11, where R is 3,7,11-trimethyldodeca-2,4,6,10-tetraen-1-yl.

13. The process according to any of claims 8 to 12, where the nonpolar solvent is selected from aliphatic hydrocarbons and diethyl ether, and the electrolyte solution is an at least 2% by weight aqueous sodium chloride solution.

14. The process according to any of claims 8 to 13, where the polar solvent is selected from halogenated hydrocarbons, tetrahydrofuran, dioxane and dimethyl sulfoxide.

## Revendications

1. Procédé de purification de sels de phosphonium de formule
R-P^{⊕}R'₃X^{⊖}
dans lequel R représente un radical hydrocarbure ayant 5 à 40 atomes de carbone, R' un groupe alkyle en C₁-C₄ ou aryle en C₆-C₁₀ et X un équivalent d'un anion, dans lequel:
a) une colonne de chromatographie conditionnée avec une résine échangeuse de cations sous forme saline est chargée avec une solution du sel de phosphonium brut, la solution du sel de phosphonium brut étant dirigée sur le lit de la résine échangeuse de cations sous forme saline,
b) la résine échangeuse de cations est lavée avec au moins un solvant polaire protique ou non protique et/ou au moins un solvant non polaire pour éliminer des éléments non souhaités, et
c) le sel de phosphonium est élué de la résine échangeuse de cations avec une solution électrolyte, éventuellement en combinaison avec un solvant polaire non protique.

2. Procédé selon la revendication 1, dans lequel R comporte 1 à 8 unités isoprène.

3. Procédé selon la revendication 2, dans lequel R représente un radical ionylidènéthyle.

4. Procédé selon la revendication 3, dans lequel R représente du 3,7,11-triméthyldodéca-2,4,6,10-tétraén-1-yle.

5. Procédé selon l'une quelconque des revendications précédentes, dans lequel le solvant polaire protique est choisi parmi l'eau et des alcanols en C₁-C₄, et le solvant non polaire parmi des hydrocarbures aliphatiques et du diéthyléther.

6. Procédé selon l'une quelconque des revendications précédentes, dans lequel le solvant polaire non protique est choisi parmi des hydrocarbures halogénés, du tétrahydrofuranne, du dioxanne et du diméthylsulfoxyde.

7. Procédé selon l'une quelconque des revendications précédentes, dans lequel il s'agit, en ce qui concerne la solution électrolyte, d'une solution de chlorure de sodium aqueuse.

8. Procédé de purification de sels de phosphonium de formule
R-P^{⊕}R'₃X^{⊖}
dans lequel R, R' et X ont la signification indiquée dans la revendication 1, dans lequel :
a) une colonne de chromatographie conditionnée avec une résine adsorbante est chargée avec une solution du sel de phosphonium brut, la solution du sel de phosphonium brut étant dirigée sur le lit de la résine adsorbante,
b) la résine adsorbante est lavée avec au moins un solvant non polaire et/ou au moins une solution électrolyte pour éliminer des éléments non souhaités, et
c) le sel de phosphonium est élué de la résine adsorbante avec un solvant polaire.

9. Procédé selon la revendication 8, dans lequel une résine adsorbante de polyacrylate ou de polystyrène est utilisée en tant que résine adsorbante.

10. Procédé selon la revendication 8 ou 9, dans lequel R comporte 1 à 8 unités isoprène.

11. Procédé selon la revendication 10, dans lequel R représente un radical ionylidènéthyle.

12. Procédé selon la revendication 11, dans lequel R représente du 3,7,11-triméthyldodéca-2,4,6,10-tétraén-1-yle.

13. Procédé selon l'une quelconque des revendications 8 à 12, dans lequel le solvant non polaire est choisi parmi des hydrocarbures aliphatiques et du diéthyléther, et il s'agit, en ce qui concerne la solution électrolyte, d'une solution de chlorure de sodium aqueuse à au moins 2 % en poids.

14. Procédé selon l'une quelconque des revendications 8 à 13, dans lequel le solvant polaire est choisi parmi des hydrocarbures halogénés, du tétrahydrofuranne, du dioxanne et du diméthylsulfoxyde.
